Europäisches Patentamt

European Patent Office

Office européen des brevets

(11) Publication number: 0 265 915
A2

(12) **EUROPEAN PATENT APPLICATION**

(21) Application number: 87115789.7

(22) Date of filing: 27.10.87

(51) Int. Cl.4: **B29C 53/56** , B29C 53/84 , B29C 67/14

(30) Priority: 28.10.86 US 923872

(43) Date of publication of application:
04.05.88 Bulletin 88/18

(84) Designated Contracting States:
AT BE CH DE ES FR GB GR IT LI LU NL SE

(71) Applicant: PHILLIPS PETROLEUM COMPANY
5th and Keeler
Bartlesville Oklahoma 74004(US)

(72) Inventor: O'Connor, James Edward
5908 S.E. Martin Pl.
Bartlesville, OK 74006(US)
Inventor: Bohannan, John Randy
RR 1, Box 315A
Dewey, OK 74029(US)

(74) Representative: Geissler, Bernhard, Dr.
Patent- und Rechtsanwälte et al
Bardehle-Pagenberg-Dost-
Altenburg-Frohwitter-Geissler & Partner
Postfach 86 06 20
D-8000 München 86(DE)

(54) Compacting filament wound thermoplastic structures.

(57) Apparatus and methods are provided for manufacturing a filament wound thermoplastic structure. A filament reinforced thermoplastic strip is wound about a rotating mandrel to build up multiple layers of the strip about the mandrel and thereby form the structure. As an intermediate portion of the strip is received about the mandrel, that intermediate portion is compacted against any underlying layer of the strip by pressing a compacting element against an outer surface of the intermediate portion of the strip. During this compacting process, the intermediate portion of the strip and any underlying layer are heated by heating the compacting element. This results in a substantially reduced void content in the resulting filament wound thermoplastic structure.

FIG. 2

EP 0 265 915 A2

# COMPACTING FILAMENT WOUND THERMOPLASTIC STRUCTURES

## Background Of The Invention

### 1. Field Of The Invention

The invention relates to the construction filament wound thermoplastic structures, and in preferred embodiments to methods and apparatus for constructing such structures from filament reinforced strips.

### 2. Description Of The Prior Art

In recent years there has been a considerable amount of development of filament reinforced thermoplastic structures. These structures provide high strength, light weight, and corrosion resistance which make them particularly suitable to applications such as the aerospace industry.

One particular composite of interest is a carbon fiber reinforced polyphenylene sulfide composite. Such composite materials can be fabricated in the form of a very thin, relatively wide prepreg strip comprised of a plurality of parallel tows of carbon fiber material in a matrix of polyphenylene sulfide. Such a strip can have a thickness of about 0.01 inch or less and a width in the range of from 1/8 inch up to several inches.

Also, when constructing tubular, and particularly cylindrical, structures from filament reinforced thermoplastic, it is known to construct such structures by winding a filament reinforced prepreg strip in multiple layers upon a rotating mandrel. This is shown for example in U.S. Patent No. 4,010,054 to Bradt.

One particular problem which is encountered when constructing filament reinforced thermoplastic structures by the process of winding a prepreg strip upon a rotating mandrel, is that of the creation of voids between the layers of material, thus significantly reducing the strength of the finished product.

The present invention is directed to apparatus and methods for producing objects having a low void content.

## Summary Of The Invention

A filament reinforced thermoplastic structure is constructed by depositing an overlying layer of a thermoplastic impregnated filament strip upon a previously deposited underlying layer of thermoplastic impregnated filament strip. The overlying layer is compacted against the underlying layer by pressing a compacting element against an outer surface of the overlying layer promptly as the overlying layer is deposited upon the underlying layer. Preferably, the compacting occurs substantially immediately upon contact of the overlying layer with the underlying layer.

As the overlying layer is being compacted against the underlying layer, both the overlying and underlying layers are heated by heating the compacting element.

This technique is particularly applicable to the manufacture of a filament wound thermoplastic structure. In that instance, the thermoplastic impregnated filament strip is wound about a mandrel to build up multiple layers of the strip about the mandrel and thereby form the desired structure. As an intermediate portion of the strip is received about the mandrel, that portion is compacted against any underlying layer of the strip by pressing the compacting element against an outer surface of the intermediate portion. Again, this compacting preferably occurs substantially immediately upon contact of the intermediate portion of the strip against any underlying layer.

The combination of pressure and heat at the point of first contact of the intermediate portion of the strip with the underlying layer substantially prevents the formation of voids between the intermediate portion and the underlying layer.

Numerous objects, features and advantages of the present invention will be readily apparent to those skilled in the art upon a reading of the following disclosure when taken in conjunction with the accompanying drawings.

## Brief Description Of The Drawings

FIG. 1 is a schematic end elevation view of an apparatus for constructing filament wound thermoplastic structures in accordance with the present invention. The view of FIG. 1 is taken along line 1-1 of FIG. 2.

FIG. 2 is a schematic plan view of the apparatus of FIG. 1.

## Detailed Description Of The Preferred Embodiments

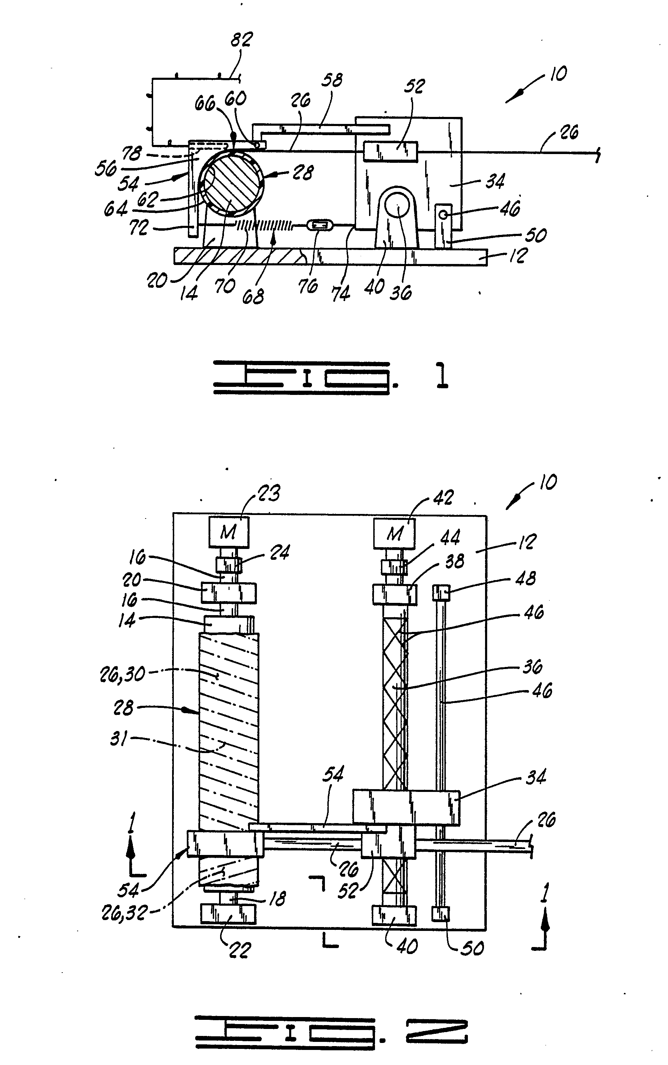

FIGS. 1 and 2 show elevation and plan views, respectively, of a winding apparatus 10 constructed for manufacturing filament reinforced thermoplastic structures in accordance with the present invention.

The apparatus 10 includes a frame or base plate 12. A mandrel 14 has reduced diameter end portions 16 and 18 thereof journaled in bearing blocks 20 and 22, respectively, which are mounted upon the base plate 12.

The mandrel 14 is driven by any suitable drive means such as an electric motor 23 which is drivingly connected to reduced diameter end 16 of mandrel 14 by a coupling 24.

The mandrel 14, which is usually of cylindrical shape, is constructed for receiving a filament reinforced thermoplastic strip 26 in multiple wound layers to form a cylindrical filament reinforced thermoplastic structure 28 thereabout. The structure 28 is created from multiple wound layers of strip 26 received about the mandrel 14.

Although the preferred embodiment shown and described herein is described with regard to the use of a prepreg strip having continuous reinforcing strands contained in a uniform continuous thermoplastic matrix, it will be understood that the invention is generally applicable to the use of any thermoplastic impregnated filament strip. For example, it is not necessary that the thermoplastic matrix be in a solid continuous state at the time the strip is would upon the mandrel. The strands of reinforcement could instead carry finely dispersed particles of the resin. The reinforcing strands can also carry the resin in the form of a viscous fluid where melting of the resin has occurred. The workpiece 26 could also be in the form of separate reinforcing strands and separate resin strands.

In FIG. 2, an underlying first layer 26,30 comprised of a negatively sloped helical winding of strip 26 is schematically represented in phantom lines, as is an overlying second layer 26,32 which is in the process of being formed by a positively sloped helical winding of strip 26. The adjacent edges, such as 31, of the helical windings of layers, 26,30 and 26,32 represented by phantom lines because the windings will generally be fused together so that the edges of adjacent windings within a layer will not be distinguishable.

These multiple layers of the strip 26 upon the mandrel 14 are created by rotating the mandrel 14 in a counterclockwise direction as viewed in FIG. 1 while simultaneously reciprocating a traveling carriage means 34 along the length of a threaded rotating carriage drive shaft 36.

The drive shaft 36 is journaled in bearing blocks 38 and 40. A suitable drive means such as electric motor 42 is connected to shaft 36 by coupling 44.

The carriage drive shaft 36 has a bi-directional helical groove 46 defined therein which causes carriage 34 to move back and forth along the length of shaft 36 as shaft 36 is rotated, in a manner well known to those skilled in the art. This causes the strip 26 to be laid upon the rotating mandrel 14 in helical layers such as 26,30 and 26,30.

A guide shaft 46 is supported from base plate 12 by posts 48 and 50 and is slidably received through carriage 34 to prevent rotational motion of carriage 34.

Attached to and traveling with the carriage 34 is a forming die 52. In the apparatus illustrated, the filament reinforced thermoplastic prepreg strip 26 is being formed from the raw filament and polymer materials immediately prior to being wound upon the mandrel 14. The incoming portion of the strip 26 shown to the right of forming die 52 in FIG. 2 is composed of reinforcing filaments which have been saturated or impregnated with a finely ground polymer material.

The strip 26 is pulled through the forming die where it is heated to melt the polymer material and compress it together to form a uniform polymer matrix around the parallel reinforcing filaments. That portion of the strip 26 exiting the forming die 52 is in a hot semi-molten state immediately as it exits the forming die 52.

The reinforcing filaments of the strip 26 can be any of a number of well-known types such as continuous tows of carbon, glass, aramid or metal fibers or mixtures thereof.

The traveling carriage 34 and attached forming die 52 can be collectively referred to as a feeder means 34, 52 operably asso ciated with the mandrel 14 for feeding the strip 26 to the mandrel 14 as the mandrel 14 rotates.

The apparatus 10 also includes a compaction means 54 operably associated with the mandrel means 14 and the feeder means 34, 52 for compacting an intermediate portion of the strip 26 against an underlying layer such as 26,30 of strip 26 as the intermediate portion is wound upon the rotating mandrel means 14.

The compaction means 54, which is best seen in FIG. 1, includes a compacting element or shoe 56 which is carried with the carriage 34 by a support arm 58 which is fixedly attached to carriage 34 and which is pivotally connected to compacting element 56 by pivot pin 60.

The compacting shoe 56 is constructed of steel and is L-shaped and has a polished curved surface 62 defined thereon substantially complementary to an arc of an outer cylindrical surface 64 of structure 28. The curved surface 62 is constructed to continuously compactingly engage an arc of the cylindrical outer surface 64 of structure 28. In addition to compacting and consolidating the layers of the strip 26, the polished surface 62 smooths the outer surface of structure 28.

The compacting shoe 56 is arranged to compact the intermediate portion of strip 26 against the underlying layer 26,30 beginning at a point 66 of first contact of the intermediate portion 26 with the underlying layer 26,30.

The compaction means 54 further includes a resilient biasing means 68 operably associated with the compacting shoe 56 for resiliently biasing the compacting shoe 56 against the outer surface 64 of structure 28 and accordingly against an outer surface of strip 26 as it is wound upon the mandrel 14 and becomes part of the structure 28. This outer surface of strip 26 is the upper surface of strip 26 as viewed in FIG. 1 for that portion of strip 26 running from forming die 52 to the mandrel 14.

The resilient biasing means 68 may be constructed in any number of ways. One preferred form the use of a coiled tension spring 70 having one end thereof connected to a lower leg portion 72 of shoe 56. The other end of spring 70 is connected at 74 to the traveling carriage 34. Preferably a tension adjusting device such as turn buckle 76 is included with the spring 70. Adjustment of the turn buckle 76 allows the compacting pressure applied by shoe 56 to the incoming strip 26 to be varied.

Also, the resilient biasing means 68 provides a means for accommodating radial growth of the structure 28 as multiple layers of strip 26 are wound upon the rotating mandrel 14.

An alternative form of resilient biasing means can be provided by hanging a weight from the lower leg portion 72 of compacting shoe 56. The weight can be adjusted to vary the compacting force.

The apparatus 10 further includes a heater means 78, see FIG. 1, operably associated with the compacting element 56 for heating the compacting element 56 and thereby heating the intermediate portion of strip 26 and the underlying layers such as 26,30 as the intermediate portion of strip 26 is compacted against the underlying layer 26,30.

The heater 78 is preferably an electric cartridge type heater disposed in a bore defined in compacting element 56. An electric power line 82 is schematically illustrated as being connected to heater 78.

Alternatively, a strip heater (not shown) mounted on the sides of the compacting shoe 56 can be used.

Also, in its broadest aspects, the process of the present invention is not limited to the construction of composite thermoplastic structures which are wound about a rotating mandrel. For example, the present invention can be used with a tape laying machine in which an overlying layer of thermoplastic impregnated filament strip is deposited upon an underlying layer of thermoplastic impregnated filament strip to form a structure. The overlying layer is compacted against the underlying layer by pressing a heated compacting element against an outer surface of the overlying strip promptly, and preferably immediately, as the overlying layer is deposited upon the underlying layer. The overlying layer and underlying layer are heated by heating the compacting element.

The apparatus and methods of the present invention have particularly been developed for use with very high strength, high temperature composite materials such as those constructed from a matrix of polymer material from the polyarylene sulfide family. Polyarylene sulfides are a family of aromatic sulfide polymers having the general formula $(AR-X-AR-S)_n$. The aromatic unit may be a mono or polycyclic moiety and X may be selected from at least one of the groups 0, S, $SO_2$ CO, OCO, NCHO, etc. In general, these polymers are noted for their excellent chemical resistance, good thermal stability and physical strength.

The simplest member of the polyarylene sulfide family, which was utilized for the test results shown below, is polyphenylene sulfide which consists of a polymer backbone of alternating distributed aromatic rings and divalent sulphur atoms. Polyphenylene sulfide is a commercial engineering thermoplastic resin that is semi-crystalline in nature with a glass transition temperature of 85°C. and a crystalline melting point of 285°C.

With the particular polyarylene sulfide materials under consideration, the very viscous nature of the heated polymer prevents sufficient compaction and consolidation from occuring if tension upon the strip being fed to the mandrel is merely increased. Tests conducted without the heated compaction device of the present invention resulted in such high void content and poor structure that it was not possible to accurately measure the void content. When subjected to post-backing treatments, the void content of these non-compacted structures was reduced to the range of 7-10%.

The post-backing treatment consisted of placing the mandrel 14 with the structure 28 still in place thereon in an oven and heating the same at 300°C. This heating caused expansion of the mandrel 14 which itself provided some compaction to help eliminate the voids. Although post-baking can be utilized to substantially reduce the voids in a finished structure, that procedure is undesirable because it is time-consuming and usually ruins the outer appearance of the winding.

A series of tests were then conducted utilizing the apparatus of FIGS. 1 and 2 to determine the preferred temperature to which the compacting element 56 should be heated to substantially eliminate the voids in the resulting structure when utilizing a strip 26 of filament reinforced polyphenylene sulfide material. The prepreg strip 26 utilized in these tests was 0.5 inches wide having a thickness of approximately 0.012 inch. The mandrel 14 was a steel mandrel having a diameter of 6.0 inches and rotating at a speed of 2 rpm.

The first tests, represented by run numbers 1-8 in Table I below, utilized compacting device temperatures in the range of 340-360°C. Even with post-baking after heated compaction there still was a measurable void content for those samples.

Later testing represented by runs 9 and 11-13, however, at compaction device temperature in the range of about 370°C. to 375°C. showed substantially complete elimination of voids without any need for post-baking.

The void content data displayed in column 4 of Table I was determined based on ASTM Methods D3171-76 (Fiber Content of Reinforced Resin Composites) and D2734-70 (Void Content of Reinforced Plastics).

Thirteen tests were run as shown in the following Table I.

## TABLE I

| Run Number | Compaction Device Temperature | Time Post-Bake @ 300°C. | Vol. % Voids | Type Filament |
|---|---|---|---|---|
| 1 | 340°C. | 30 minutes | 0 | Carbon |
| 2 | 340°C. | 68 minutes | 7.85 | Carbon |
| 3 | 340°C. | 2 hours | 12.79 | Carbon |
| 4 | 350°C. | 30 minutes | 5.84 | Carbon |
| 5 | 360°C. | 2 hours | 5.82 | Carbon |
| 6 | 340°C. | 30 minutes | 0 | Glass |
| 7 | 340°C. | 0 | 4.3 | Carbon |
| 8 | 360°C. | 30 minutes | 9.6 | Glass |
| 9 | 370°C. | 0 | 0 | Glass |
| 10 | 375°C. | 25 minutes | 2.55 | Glass |
| 11 | 375°C. | 0 | .65 | Carbon |
| 12 | 370°C. | 0 | 0 | Carbon |
| 13 | 370°C. | 0 | 0 | Carbon |

As is apparent in tests 2-5 and 8, even with post-baking treatments, a substantial measurable void content was still present in most of the tests conducted. As is shown in tests 9 and 11-13, however, when the temperature of compaction device 56 was raised to the range of about 370°C. to 375°C., the resulting void content was reduced to zero or near zero with no post-baking treatment required.

As will be appreciated by those familiar with the ASTM void content measuring techniques referenced above, the amount of material being measured is very small, and small errors encountered in the process will sometimes result in a negative void percentage calculation where the actual presence of voids is zero or near zero. The void percentages determined in accordance with the ASTM test for tests 1, 6, 9 12 and 13, actually produced relatively small negative void percentage numbers. Since it is recognized that a negative void percentage is not physically possible, those test results are represented in column 5 by a designation of zero volume percent voids.

During these tests, the compacting pressures applied to strip 26 were in the range from about 15 psi to about 20 psi.

The strip 26 was exiting the forming die 52 at a temperature in the range of about 300°C. to 350°C. That strip 26 will cool somewhat before it reaches mandrel 14, but still will be in a semi-molten state.

During the winding process, the underlying layer 26, 30 will have cooled substantially so that is far below the melting temperature of polyphenylene sulfide when the next layer 26,32 is being laid upon it. The heating of the heating element 56 to in the range of 370°C. to 375°C. is sufficient to heat both the incoming newly formed strip 26 and the underlying layer 26,30 to a semi-molten stage so that an inner or lower surface of strip 26 will fuse to the outer surface of underlying layer 26,30 so that the layers are united and it is impossible to distinguish between the thermoplastic material of layer 26,30 and layer 26,32.

It is the simultaneous application of a compacting pressure with sufficient heat to fuse the strip 26 to the underlying layer 26,30 promptly upon contact of strip 26 with the underlying layer 26,30, which is believed to be responsible for the resulting elemination of voids in the finished product without the need for any post-baking treatments or the like. Preferably, the compacting pressure and heat are applied at substantially the first point 66 of contact of strip 26 with the underlying layer 26,30.

Alternative forms of heated compacting elements 56 can be utilized. Subsequent tests by applicants have utilized flat bar shaped heated compacting devices and heated compacting roller devices. Also, there are a number of other heat sources which could be utilized other than electric heaters. For example, laser, infrared, ultrasonic and induction coil heat sources could be utilized.

While it is recognized that the temperature to which the compacting device must be heated to accomplish the desired results will vary depending upon the structure of the heating device, the crucial feature is that sufficient pressure and temperature be applied to compact the incoming strip 26 with the underlying layer 26,30 while substantially simultaneously fusing the incoming strip 26 to the underlying layer 26,30 to thus prevent the formation of any voids at the point 66 of first contact of incoming strip 26 with underlying layer 26,30.

Thus it is seen that the apparatus and methods of the present invention readily achieve the ends and advantages mentioned, as well as those inherent therein. While certain preferred constructions and arrangements of parts and steps have been described for the purposes of this disclosure, numerous changes may be made by those skilled in the art, which changes are encompassed within the scope and spirit of the present invention as defined by the appended claims.

### Claims

1. A method comprising:

(a) depositing an overlying layer of a thermoplastic impregnated filament strip upon a previously deposited underlying layer of thermoplastic impregnated filament strip to form a structure;

(b) compacting the overlying layer against the underlying layer by pressing a compacting element against an outer surface of said overlying layer promptly as said overlying layer is deposited upon said underlying layer; and

(c) during step (b), heating said overlying layer and said underlying layer by heating said compacting element,

in particular wherein:

step (b) is further characterized as substantially immediately compacting said overlying layer against said underlying layer as soon as said overlying layer contacts said underlying layer; or

steps (b) and (c) are further characterized as reducing a void content of said structure as compared to a similar process not including compaction and heating promptly as said overlying layer is deposited upon said underlying layer; or

step (c) is further characterized as heating said overlying layer and said underlying layer to a sufficient temperature to unite an inner surface of said overlying layer with an outer surface of said underlying layer.

2. The method of claim 1, wherein:

step (a) is further characterized in that said ther-moplastic material of said overlying and underlying layers is a polyarylene sulfide material;

in particular wherein:

step (a) is further characterized in that said thermoplastic material is polyphenylene sulfide;

step (c) is further characterized as heating said compacting element to at least about 370°C; and

steps (b) and (c) are further characterized as providing a substantial elimination of a void content of said structure.

3. The method of claim 1, being further characterized as a method of manufacturing a filament wound thermoplastic structure, wherein:

step (a) is further characterized as winding said strip about a mandrel to build up multiple layers of said strip about said mandrel and thereby form said structure, said overlying layer being defined as in intermediate portion of said strip.

4. A method manufacturing a filament would thermoplastic structure, said method comprising the steps of:

(a) winding a thermoplastic impregnated filament strip about a mandrel to build up multiple layers of said strip about said mandrel to build up multiple layers of said strip about said mandrel and thereby form said structure;

(b) as an intermediate portion of said strip is received about said mandrel, promptly compacting said portion against any underlying layer of said strip by pressing a compacting element against an outer surface of said intermediate portion; and

(c) during step (b), heating said intermediate portion of said strip and said underlying layer by heating said compacting element;

in particular wherein:

step (b) is further characterized as substantially immediately compacting said intermediate portion against said underlying layer as soon as said intermediate portion contacts said underlying layer; and/or

step (c) is further characterized as heating said intermediate portion and said underlying layer to a sufficient temperature to fuse an inner surface of said intermediate portion to an outer surface of said underlying layer.

5. The method of claim 4, wherein:

step (a) is further characterized in that a thermoplastic material of said strip is a polyarylene sulfide material;

in particular wherein:

step (a) is further characterized in that said thermoplastic material is polyphenylene sulfide;

step (c) is further characterized as heating said compacting element to at least about 370°C.; and

steps(b) and (c) are further characterized as providing a substantial elimination of a void content of said structure.

6. The method of claim 4, wherein:

step (b) is further characterized in that said compacting is accomplished by resiliently biasing said compacting element against outer surface of said intermediate portion of said strip thereby accommodating radial growth of said structure as said strip is wound about said mandrel; and/or

steps (b) and (c) are further characterized as reducing a void content of said structure as compared to a similar process not including compaction and heating promptly as the intermediate portion of the strip is received about said mandrel.

7. An apparatus for manufacturing a filament wound thermoplastic structure, comprising:

a frame;

a mandrel means, rotatably mounted on said frame, for receiving a thermplastic impregnated filament strip in multiple would layers thereabout to form said structure;

feeder means, operably associated with said mandrel means, for feeding said strip to said mandrel means as said mandrel means rotates;

compaction means, operably associated with said mandrel means and said feeder means, for compacting an intermediate portion of said strip against any underlying layer of said strip promptly as said intermediate portion is wound upon said rotating mandrel means; and

heater means, operably associated with said compaction means, for heating said compaction means and thereby heating said intermediate portion of said strip and said underlying layer as said intermediate portion is compated against said underlying layer of said strip.

The apparatus of claim 7, wherein:

said compaction means is arranged to compact said intermediate portion of said strip against said underlying layer beginning at a point of first contact of said intermediate portion with said underlying layer.

9. The apparatus of claim 7 or 8, wherein said compaction means includes:

a compacting element for engaging an outer surface of said intermediate portion of said strip; and

resilient biasing means, operably associated with said compacting element, for resiliently biasing said compacting element against said outer surface of said intermediate portion.

10. The apparatus of claim 9, wherein:

said resilient biasing means is further characterized as a means for accommodating radial growth of said structure as multiple layers of said strip are wound upon said rotating mandrel means;

in particular wherein:

said resilient biasing means is adjustable for varying compacting pressures applied to said strip.

8

FIG. 1

FIG. 2